# EUROPEAN PATENT SPECIFICATION

(11) **EP 2 969 956 B1**
(45) Date of publication and mention of the grant of the patent: **27.04.2022**
(21) Application number: 14772835.6
(22) Date of filing: 04.03.2014
(51) Int. Cl.: C01G 17/00, B01D 37/02, C10G 27/10, C10G 31/09, C10G 29/10, C10G 29/28, C10G 27/14, C10G 27/12

(54) **METHOD FOR REMOVING HEAVY METALS FROM FLUIDS**
VERFAHREN ZUR BESEITIGUNG VON SCHWERMETALLEN AUS FLUIDEN
METHODE POUR ÉLIMINER DES MÉTAUX LOURDS À PARTIR DE FLUIDES

(30) Priority: 14.03.2013 US 201313826213
(43) Date of publication of application: 20.01.2016
(73) Proprietor: Chevron U.S.A. Inc., San Ramon, CA 94583 (US)
(72) Inventor: COOPER, Russell Evan, San Ramon, California 94583 (US); O'REAR, Dennis John, San Ramon, California 94583 (US); YEAN, Sujin, San Ramon, California 94583 (US); ODUEYUNGBO, Seyi Abiodun, San Ramon, California 94583 (US)
(74) Representative: Haseltine Lake Kempner LLP
(86) International application number: PCT/US2014/020298
(87) International publication number: WO 2014/158810

(56) References cited:
- WO-A2-2012/068277
- FR-A1- 2 959 240
- US-A- 5 601 701
- US-A1- 2003 116 475
- US-A1- 2008 000 809
- US-A1- 2010 147 745
- US-A1- 2012 067 785
- US-B1- 6 537 443

## Description

### TECHNICAL FIELD

The invention relates to a method for removing heavy metals such as mercury from liquid hydrocarbons.

### BACKGROUND

Heavy metals such as mercury can be present in trace amounts in all types of hydrocarbon streams such as crude oils. The amount can range from below the analytical detection limit to several thousand ppbw (parts per billion by weight) depending on the source. It is desirable to remove the trace amounts of these metals from crude oils.

Various methods to remove trace metal contaminants in liquid hydrocarbon feed such as mercury have been disclosed.

US Patent Nos. 6537443 and 6685824 disclose processes for removing mercury, in which the liquid hydrocarbon feed is mixed with sulfur containing compounds, and removing the mercury-containing particulates in a pre-coated pressure filter. A filtering process is compact, but it may result in loss of hydrocarbons and waste in the form of oily solids. In US Patent Publication Nos. US20120067785A1, US20120067784A1, US20120125816A1, reactive extraction methods are employed, wherein the liquid hydrocarbon feed stream is brought into contact with additives including but not limited to an iodine source, tetrakis(hydroxymethyl)phosphonium sulfate / tetrakis(hydroxymethyl) phosphonium chloride, and oxidizing agents, respectively, wherein mercury is extracted from the crude oil into a water phase for subsequent removal.

FR 2 959 240, US 2010/147745 and US 6 537 443 all disclose methods for removing mercury from hydrocarbons.

There is a need for improved methods for the removal of mercury from liquid hydrocarbon streams.

### SUMMARY

The method of the invention is defined in the appended claims.

### DRAWINGS

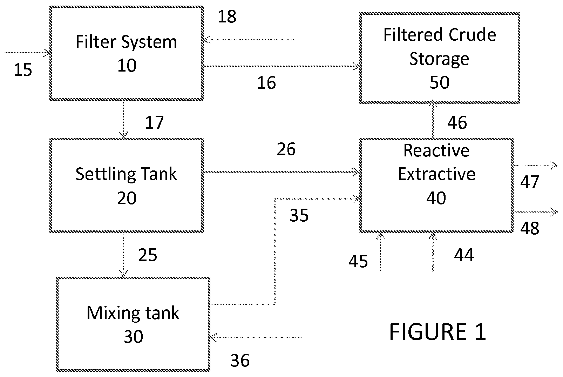

Figure 1 is a block diagram of embodiments of a system and a process to remove mercury from oily solids.

### DETAILED DESCRIPTION

The following terms will be used throughout the specification and will have the following meanings unless otherwise indicated.

"Crude oil" refers to both crude oil and condensate. Crude, crude oil, crudes and liquid hydrocarbons are used interchangeably and each is intended to include both a single crude and blends of crudes.

"Trace amount" refers to the amount of mercury in the crude oil, which varies depending on the source, e.g., from a few ppb to up to 30,000 ppb.

"Dead-end filtration" (conventional or normal filtration) refers to a filter system where substantially the entire liquid portion of the slurry, rather than just a fraction, is forced through the filter element, with most or all of the solids retained on the filter element as filter cake.

"Cross-flow" filtration (or crossflow filtration or tangential flow filtration (TFF)) refers to a filtration technique in which the feed stream flows parallel or tangentially along the surface of the filter element (membrane) and the filtrate flows across the filter element, and typically only a portion of the liquid in the solids-containing stream passes through the filter element. In cross-flow filtration, solid material which is smaller than the filter element pore size passes through (across) the element as permeate or filtrate, and everything else is retained on the feed side of the element as retentate or concentrate.

"Diafiltration" (DF) refers to a cross-flow filtration process wherein a buffer material, e.g., a solvent, is added into the feed stream and / or the filtering process while filtrate is removed continuously from the process.

"Dynamic filtration" is an extension of cross-flow filtration, wherein the filter medium is kept essentially free from plugging or fouling by using rotary, oscillating, or vibratory motion of the filtration membrane relative to the feed slurry to disrupt the formation of cake layers adjacent to the filter medium. These results are accomplished by moving the material being filtered fast enough relative to the filtration medium to produce high shear rates as well as high lift forces on the particles.

As used herein, the term cross-flow filtration (or filter) includes diafiltration and dynamic filtration techniques / apparatuses.

Crudes may contain small amounts of mercury, which may be present as elemental mercury Hg⁰, ionic mercury, inorganic mercury compounds, and / or organic mercury compounds. Examples include but are not limited to: mercuric halides (e.g., HgXY, X and Y could be halides, oxygen, or halogen-oxides), mercurous halides (e.g., Hg₂XY, X and Y could be halides, oxygen, or halogen-oxides), mercuric oxides (e.g., HgO), mercuric sulfide (e.g., HgS, meta-cinnabar and/or cinnabar), mercuric sulfate (HgSO₄), mercurous sulfate (Hg₂SO₄), mercury selenide (e.g., HgSe₂, HgSe₈, HgSe), mercury hydroxides, and organo-mercury compounds (e.g., alkyl mercury compounds) and mixtures of thereof.

The invention relates to the removal of trace mercury in crude oil in a mercury removal process comprising a filtration step and a reactive extraction step, for a compact system requiring less chemical reagents than in the prior art.

Filtration Process Step: In the invention, the liquid hydrocarbon is first treated in a filtration process step, wherein a portion of mercury particulate mercury and solids containing adsorbed mercury are removed.

In the invention the filter system comprises a cross-flow filter device. The cross-flow device is of the dynamic filtration type in one embodiment. In a second embodiment, the cross-flow filter device is of a vibratory shear enhanced processing (VSEP) filter type from New Logic Research, Inc. of Emeryville, CA and similar devices from other manufacturers. The cross-flow filter device separates a mercury containing crude feed into two streams, a first stream which passes through the filter membrane containing crude with a reduced mercury concentration ("permeate stream"), and a second stream ("retentate stream") with the remainder of the crude feed, solids, and particulates, which does not pass through the filter membrane, having mercury concentration of at least 10 - 50 times the mercury concentration in the first stream.

In cross-flow filtration operation, a portion of the retentate stream is recycled and combined with the liquid hydrocarbon feed to the cross-flow filter. The amount of the recycle stream in the recirculation loop can be varied to allow further concentration of the mercury in the reject (retentate) stream, provide buffer from process upsets, and control of the concentration in the reject stream for further Hg removal treatment. A portion of the retentate stream ranging from 1 to 25% of the total stream can be continuously or periodically purged from the cross-flow filtration process as a reject stream, allowing control of the amount of mercury and other matters from the system. In one embodiment, a portion the retentate stream equivalent to about 1-10% of the feed to the filtration system is purged for further treatment in the reactive extraction process step.

Any suitable filtration element (membrane) can be utilized in the crossflow filtration assembly. In one embodiment, the filter element comprises a porous material which permits crude oil and solids below a certain size to flow through as the filtrate (or permeate) while retaining particles, including mercury-containing particles, in the retentate. The filter membrane is of sufficient nominal pore size for at least 50% of the crude to pass through in one embodiment; at least 60% in a second embodiment; at least 70% in a third embodiment; and at least 80% in a fourth embodiment. The filter membrane has a pore size of 0.1 - 50 µm in one embodiment; of 0.5 - 20 µm in a second embodiment; and at least 1 µm in a third embodiment.

Polymers, organic materials, inorganic ceramic materials, and metals are suitable for use as construction materials for the membrane in the cross-flow filtration device, as long as it does not undergo significant chemical changes to substantially impair the desired properties of the filtered crude. In one embodiment, the material is an inorganic material such as a ceramic (silicon carbide, zirconium oxide, titanium oxide, etc.) having the ability to withstand harsh environments. In another embodiment, the material is a metal such as stainless steel, titanium, or nickel-copper alloy.

Over time, filtration becomes more difficult as pressure builds up across the filter apparatus with the filter element being clogged up with particulates. The filter is periodically (or whenever needed as clogged) back-flushed to remove oily solids, which comprise filtered particulates and pre-coated filter aid material (if any was applied). In one embodiment, the back-flushing is carried out by reversing the flow direction of the filtrate stream to force oily solids off the membrane / screen, generating a reject stream. In another embodiment, the trans-membrane pressure is periodically inverted by the use of a secondary pump. In one embodiment, the filter device is back-flushed with a fluid to force the filtered particulates and filter aid materials (if any was applied) off the filter element and out of the filter system. This back flushing also forces a portion of the hyrocarbon liquids out of the filter system with the solids as a reject stream.

In one embodiment, a gas, e.g., methane, nitrogen, carbon dioxide, etc., is used for the back-flushing. In another embodiment, in addition to or in place of using a gas, the filtered crude or a solvent (or a mixture thereof) is used to extract the oily solids. The extraction solvent is a light specific gravity solvent or solvent mixtures, such as, for example, xylene, benzene, toluene, kerosene, reformate (light aromatics), light naphtha, heavy naphtha, light cycle oil (LCO), medium cycle oil (MCO), propane, diesel boiling range material, which is used to "wash" the filter membrane / screen / filter aid and remove the oily solids, generating a reject stream.

In one embodiment of a cross-flow filtration operation, instead of or in addition to periodic back-flushing with a gas, the filtered crude, or an extracting solvent, a small amount of the solvent is optionally added to the feed stream to be filtered, with the weight ratio of the solvent being slowing increasing overtime to facilitate the filtration operation or decreasing the frequency of back-flushing. The solvent feed is added in a weight ratio of solvent to feed of 0 at the start of the filtering operation, to 10:1 toward the end of the operation as the pressure begins to build up as the membrane becomes clogged.

In one embodiment, the filter device comprises a plurality of filter elements with means within the assembly for back-flushing at least one of the filter screens / membranes without interrupting the operation while the device is on-stream, with the back-flushed device being isolated from the crude feed. In yet another embodiment, the filter device is of a clean-in-place (CIP) type known in the art, with accessory pumps, holding tanks, and the like supplying solvents and / or reactive agents such as sodium hypochlorite and sulfidic compounds to alleviate fouling and pressure build-up in the filtration system.

Descriptions and operations of filter devices that can be used in the filtration process step include and are not limited to US patent publications US20120132597A1 titled "Cross-flow filtration with turbulence and back-flushing action for use with online chemical monitors," US8128829 titled "Cross flow filter device," US3994810 titled "Onstream back-flush filter," and US5587074 titled "Fluid filter with enhanced back-flush flow," US6322698 titled "Vibratory separation systems and membrane separation units,".

In one embodiment and in addition to filtration, the liquid hydrocarbon is optionally treated with an organic or inorganic sulfidic compound with at least one sulfur atom reactive with mercury as disclosed in US Patent Nos. 6537443 and 6685824, In one embodiment, the sulfidic compound when dissolved in water yields S²⁻, SH⁻, Sₓ²⁻, or SₓH⁻ anions, and a solution with a pH greater than 7. Examplary sulfidic compounds include but are not limited to potassium or sodium sulfide (Na₂S), sodium hydrosulfide (NaSH), potassium or sodium polysulfide (Na₂Sx), ammonium sulfide [(NH₄)₂S], ammonium hydrosulfide (NH₄HS), ammonium polysulfide [(NH₄)₂Sx], Group 1 and Group 2 counterparts of these materials, and combinations thereof. The treating sulfidic compound is added for a concentration of 1.0 and about 10000 ppbw in one embodiment; and about 5.0 ppbw and about 1000 ppbw in a second embodiment.

In one embodiment, the sulfidic treatment is in-situ in the filtering operation with the use of filter aid materials pretreated or coated with the organic or inorganic sulfidic compound. In another embodiment, the crude feed is mixed with the sulfidic compound prior to the filter operation, in an in-line static mixer or a mixing tank with a residence time of at least 1 minute, wherein any mercury precipitate formed is removed in the filtration step. In another embodiment, the mixing time is at least 15 minutes.

Depending on the initial concentration of mercury in the liquid hydrocarbon feed, the filtration step results in two streams, a first stream for further mercury removal ("reject stream") containing optional extract solvent, oily solids, and less than 10 vol. % of the original crude feed with a mercury concentration of much higher than in the original crude feed; and a second stream with filtered crude containing at least 90 vol. % of the original crude feed, for further processing or sale.

The reject stream has a mercury concentration of at least 20 times the concentration of mercury in the filtered crude in one embodiment; at least 50 times in a second embodiment; at least 100 times in a third embodiment; and at least 1000 times in a fourth embodiment. The first stream has a mercury concentration of at least 5 times the mercury concentration in the original crude feed in one embodiment; at least 10 times in a second embodiment; and at least 100 times in a third embodiment.

The filtered crude stream has a reduced mercury concentration of less than 1000 ppbw in one embodiment; less than 500 ppbw in a second embodiment; less than 300 ppbw n a third embodiment; less than 100 ppbw in a third embodiment; and less than 50 ppbw in a fourth embodiment. With optional treatment with a sulfidic compound, the mercury in the filtered crude is reduced to less than 100 ppbw in one embodiment; less than 75 ppbw in a second embodiment; and less than 50 ppbw in a third embodiment.

Reactive Extraction Process Step: The reject stream, i.e., the crude with a concentrated mercury level is further treated with chemical reagents to lower its mercury level. In the reactive extraction process, the reject stream is brought into contact with one or more extractive agents selected from the group of tetrakis(hydroxymethyl)phosphonium sulfate; tetrakis(hydroxymethyl)phosphonium chloride; an oxidizing agent; an organic or inorganic sulfidic compound with at least one sulfur atom reactive with mercury; and combinations thereof. In one embodiment, a solvent such as water may also be added along with the extractive agent. The extractive agent extracts a portion of mercury into the water phase for subsequent removal in a phase separation process step. At least 50% of the mercury is extracted from the crude oil into the water phase in one embodiment; at least 75% extraction in a second embodiment; at least 90% extraction in a third embodiment.

In another embodiment, the crude is treated with a reducing agent ("reductant") as an extractive agent, wherein the reductant coverts at least 25% of the non-volatile mercury portion of the mercury to a volatile (strippable) form. The mercury is then removed from the crude via stripping with a stripping gas known in the art, e.g., natural gas, methane, nitrogen, or combinations thereof.

The extractive agent can be employed in any form of a liquid, a powder, slurry, aqueous form, a gas, a material on a support, or combinations thereof. Different extractive agents can be added, e.g., in one embodiment after the addition of an oxidant, a reducing agent is added. In another embodiment, the crude is brought into contact directly with a reducing agent without any oxidant addition.

The amount of extractive agent needed for mercury removal is at least equal to the amount of mercury to be removed on a molar basis (1:1), if not in an excess amount. In one embodiment, the molar ratio ranges from 2:1 to 5,000:1. In another embodiment, from 10:1 to 2,500:1. In yet another embodiment, the molar ratio ranges from 5:1 to 10,000:1.

The contact with the extractive agent can be at any temperature that is sufficiently high enough for the crude to be liquid. The contact is at room temperature in one embodiment; at a sufficiently elevated temperature, e.g., at least 50°C, in another embodiment; for at least a minute in one embodiment; at least 1 hr in another embodiment; and at least 2 hrs. in yet another embodiment.

The contact between the reject stream with concentrated mercury level and the extractive agent can be either via a non-dispersive or dispersive method. The dispersive contacting method can be via mixing valves, static mixers or mixing tanks or vessels, or other methods known in the art. The non-dispersive method can be any of packed inert particle beds, fiber film contactors, or other method known in the art.

In one embodiment, the extractive agent is an organic or inorganic sulfidic compound, which converts or extracts non-volatile mercury from the crude oil to a water-soluble form. The reactive extractive agent can be the same or different sulfur compound used in the filtration process (if any was used). Examples include but are not limited to alkali metal sulfides, alkaline earth metal sulfides, alkali metal polysulfides, alkaline earth metal polysulfides, alkali metal trithiocarbonates, dithiocarbamates, either in the monomeric or polymeric form, sulfurized olefins, mercaptans, thiophenes, thiophenols, mono and dithio organic acids, and mono and dithioesters, and mixtures thereof. In one embodiment, the sulfidic compound is water-soluble monatomic sulfur compound, e.g., any of sodium hydrosulfide, potassium hydrosulfide, ammonium hydrosulfide, sodium sulfide, potassium sulfide, calcium sulfide, magnesium sulfide, and ammonium sulfide.

In another embodiment, the extractive agent is an oxidizing agent ("oxidant") to extract mercury from the crude oil forming a soluble mercury compound. The oxidant in one embodiment is selected from the group of iodine sources, oxyhalites, hydroperoxides, organic peroxides, inorganic peracids and salts thereof, organic peracids and salts thereof, ozone, and combinations thereof. In one embodiment, the oxidant is selected from the group of elemental halogens or halogen containing compounds, e.g., chlorine, iodine, fluorine or bromine, alkali metal salts of halogens, e.g., halides, chlorine dioxide, etc. In another embodiment, the oxidant is an iodide of a heavy metal cation. In yet another embodiment, the oxidant is selected from ammonium iodide, an alkaline metal iodide, and etheylenediamine dihydroiodide. In one embodiment, the oxidant is selected from the group of hypochlorite ions (OCl⁻ such as NaOCl, NaOCl₂, NaOCl₃, NaOCl₄, Ca(OCl)₂, NaClO₃, NaClO₂, etc.), vanadium oxytrichloride, Fenton's reagent, hypobromite ions, chlorine dioxine, iodate IO₃⁻ (such as potassium iodate KIO₃ and sodium iodate NaIO₃), and mixtures thereof. In one embodiment, the oxidant is selected from KMnO₄, K₂S₂O₈, K₂CrO₇, and Cl₂.

In one embodiment, the extractive agent is a reducing agent ("reductant"), which can be added as the only extracting agent. In another embodiment, the reducing agent is added in addition to the oxidizing agent (and other optional reagents such as demulsifiers) for a portion of the mercury to be converted from a non-volatile to a volatile form. The oxidant / reductant can be introduced continuously, e.g., in a water stream being brought into contact continuously with a crude oil stream, or intermittently, e.g., injection of a water stream batch-wise.

Examples of reducing agents include but are not limited to reduced sulfur compounds contain at least one sulfur atom in an oxidation state less than +6. (e.g., sodium thiosulfate, sodium or potassium bisulfite, metabisulfite, or sulfite); ferrous and ferric compounds include inorganic and organic ferrous compounds; stannous compounds which include inorganic stannous compounds and organic stannous compounds; oxalates which include oxalic acid, inorganic oxalates and organic oxalates; cuprous compounds include inorganic and organic cuprous compounds; organic acids decompose to form CO2 upon heating and act as reducing agents; nitrogen compounds include hydroxylamine compounds and hydrazine; sodium borohydride; diisobutylaluminium hydride (DIBAL-H); thiourea; a transition metal halide such as ferric chloride, zinc chloride, NiCl₂; SO₂ in N₂ or other inert gases, hydrogen; hydrogen sulfide; and hydrocarbons such as CO₂ and carbon monoxide.

After the addition of an extractive agent that converts some of the mercury in the concentrated crude to a soluble form, e.g., iodine source or an oxidant, the treated crude having a reduced concentration of mercury can be separated from the aqueous phase containing the extracted mercury by methods known in the art, e.g., gravity settling, coalescing, etc., using separation devices such as centrifuges, hydrocyclones, separators, mesh coalescer etc.

In the invention the removal of mercury from the treated crude is enhanced with the addition of a complexing agent to the oil-water emulsion mixture, added in a sufficient amount to effectively stabilize (forming complexes with) the soluble mercury. This amount as expressed as molar ratio of complexing agent to soluble mercury ranges from 1:1 to 5,000:1 in one embodiment; from 5:1 to 1000:1 in a second embodiment; and 10:10 to 500:1 in a third embodiment. Mercury forms coordination complexes with compounds including but not limited to oxygen, sulfur, phosphorous and nitrogen containing compound, e.g., thiol groups, thiophene groups, thioether groups, thiazole groups, thalocyanine groups, thiourenium groups, amino groups, polyethylene imine groups, hydrazido groups, N-thiocarbamoyl-polyalkylene polyamino groups, derivatives thereof, and mixtures thereof. In another embodiment, the complexing agent is an inorganic sulfur compound selected from sulfides, ammonium thiosulfate, alkali metal thiosulfates, alkaline earth metal thiosulfates, iron thiosulfates, alkali metal dithionites, and alkaline earth metal dithionites, and mixtures thereof. In yet another embodiment, the complexing agent is a polyamine for forming stable cationic complexes with mercury ions.

In one embodiment with the use of a reductant as a extractive agent, the volatile mercury is stripped from the treated crude oil using methods and equipment known in the art, e.g., a stripping unit, an adsorption bed, etc. In one embodiment, the crude oil is sent to a stripping unit with the addition of a stripping (carrier) gas for the removal of the volatile mercury from the crude into the stripping gas. The crude removed from the bottom of the unit contains less than 50% of the mercury originally in the crude (both volatile and non-volatile forms) in one embodiment.

The treated crude oil can be combined with the filtered crude oil to form a combined crude oil product stream having a reduced concentration of mercury, e.g., less than 100 ppbw in one embodiment. The combined crude oil product stream in one embodiment is at least 95% volume of the crude oil feedstock to the filtration unit; and at least 98 vol. % in a second embodiment.

Stripping of Volatile Mercury: In one embodiment, with the conversion of a portion the mercury from a non-volatile to a volatile form, the volatile mercury is stripped from the reject stream while it is in contact with the extracting agents, e.g., oxidant and / or reductant, with a stripping (carrier) gas. In another embodiment, the volatile mercury is removed from the treated crude using methods and equipment known in the art, e.g., a stripping unit, an adsorption bed, etc.

After treatment with the extractive agents, the concentration of mercury in the treated crude oil is reduced to 100 ppbw or less in one embodiment; 50 ppbw or less in a second embodiment; 20 ppbw or less in a third embodiment; and less than 10 ppbw in a fourth embodiment. In yet another embodiment, at least 75% of the mercury is extracted from the crude oil in the reject stream. In another embodiment, the removal or the reduction is at least 90%.

Examples of extractive agents and methods for mercury removal using extractive agents are disclosed in US Patent Publication Nos. US20120125816A1, US20120125817A1, US20120125818A1, US20120067784A1, US20120067785A1, US20120067786A1, and US20120067779A1,

Figure Illustrating Embodiments: Reference will be made to Figure 1 for a diagram schematically illustrating various embodiments of a system for removing mercury from oily solids.

In Figure 1, a crude oil stream containing mercury **15** is sent to filtration system **10**, which in one embodiment is a bank of filter elements in the form of dead-end filtration or cross- flow filtration. In one embodiment, a gas stream **18** is used for the back-flushing of the filter element. In another embodiment, an extraction solvent stream is used for the back-flushing instead of or in addition to the gas stream **18**. Although not shown, in one embodiment, the filtration system includes a recirculation loop with one or more recirculation pumps for the recycling of the retentate stream, with a portion of the retentate stream being purged from the recycled retentate stream continuously or periodically to form the reject stream for further treatment. The filtered crude **16** with a reduced concentration of mercury is sent to storage tank **50** for sale or further treatment. The reject stream **17** containing the back-flushed crude and /or the purged portion of the retentate stream is sent to settling tank **20**. The reject stream **17** has a mercury concentration of 2-50 times the concentration of mercury in the feed stream **15**.

In one embodiment of an oxidation-complexation process for the removal of mercury (as shown in dotted lines), at least an oxidizing agent **36** is added to the reject stream **25** in a mixing tank **30**, and the mixture of oxidizing agent and crude oil **35** is directed to the reactive extraction process step **40**, with the addition of an aqueous stream containing reducing / complexing reagent **45**. Waste water **47** containing mercury is sent to disposal or re-injected into a reservoir, and crude **46** with reduced mercury content is sent to storage **50**.

In another embodiment with the use of direct reduction for the removal of mercury (solid lines), from the settling tank **20**, stream **26** containing back-flushed crude and / or purged retentate stream is directed to the reactive extraction process step **40**, wherein at least an aqueous stream containing a reducing agent **45** is added for the conversion wherein a portion of non-volatile mercury is converted to volatile strippable mercury. In one embodiment, a stripping gas **44**, e.g., N₂, CO₂, H₂, methane, argon, helium, steam, natural gas, and combinations thereof is employed to remove the volatile mercury. From this process step, gas stream **48** containing mercury is sent to disposal, re-injected into a reservoir or treated with an adsorbent material by methods known in the art for mercury removal from gas streams. Crude **46** with reduced mercury content is sent to storage **50**.

In a third embodiment of a sulfidic extraction process for the removal of mercury (as shown in dotted lines), an aqueous stream **45'** containing an inorganic sulfidic compound is added to the extraction step **40** for the conversion of or extraction of non-volatile mercury from the crude oil stream **26** to a water-soluble form. Waste water **47** containing water-soluble mercury is sent to disposal or re-injected into a reservoir, and crude **46** with reduced mercury content is sent to storage **50**.

The system as illustrated can be any of a mobile unit, located on-shore such as in a refinery, or off-shore on a facility such as an FPSO or other offshore facility for the production of oil and/or gas.

EXAMPLES: The illustrative examples are intended to be non-limiting. Note that:
1 psi is 0.0689 bar;
Specific Gravity at 15°C= 141.5/(°API+131.5);

Examples 1 - 2: Different 50° API crude and 55° API natural gas condensate samples with starting Hg concentration ranging from 588 to 2200 ppbw are processed using cross-flow filtration conducted at 175°C and 75 psig, employing a Teflon^{®} on Woven Fiberglass membrane having a pore size of 1 µm. The retentate is recycled back to the filter system in a recirculation loop with the use of a recirculation pump to combine with the feed to the system. The recirculation pump also maintains a sufficient velocity through the tubes of the filter housing (greater than 10 feet/second) to avoid membrane fouling. A portion of the retentate in an amount of about 2-10% the feed to filtration system is continuously purged from the system. The filtered products are expected to have a mercury concentration of less than 100 ppbw. The purged retentate is expected to have a concentration of 10-50 times the mercury concentration of the feed to the filter system.

Example 3: The filtration in Examples 1-2 continues until there is a substantial pressure build-up, e.g., going from 10-15 psi at the beginning to 25-30psi. The filter element is back-flushed with nitrogen, along with a small amount of the filtered oil. The back-flushed oil samples are placed into centrifuge tubes, shaken by hand vigorously for about 2 minutes. The back-flushed oil samples are expected to have a concentrated mercury level of at least 10,000 ppwb, if not at least 50,000 ppbw.

Example 4: Various samples of 50 mL of the back-flushed oil with concentrated mercury level in Example 3 are combined with the purged retentate streams, and added to a number of 10mL Teflon-capped centrifuge tubes. Different oxidants are as shown in Table 2. The tubes are shaken vigorously for about 2 minutes. 5 mL of distilled water is added to tube. A pre-determined volume of TETREN as complexing agent is added for a final concentration of 30µM. Tubes are again shaken by hand vigorously for about 2 minutes, then centrifuged for 1 minute to separate oil from water. Aliquots of both oil and water from each are analyzed for mercury with resulting concentrations as listed in Table 2. It is expected that the mercury removal efficiency is as previously obtained in US Patent Publication No. 20120125817.

**Table 2**

| No. | Oxidant | Dosage ppbw | Hg in oil ppb | Hg in water ppb | Hg removal % |
|---|---|---|---|---|---|
| 1 | None - control | - | >10,000 | < 1000 | 3.7 |
| 2 | Iodine | 1000 | < 100 | > 1000 | > 90 |
| 3 | Sodium polysulfide | 29,000 | < 100 | > 1000 | > 90 |
| 4 | Oxone^{™} | 7260 | < 150 | > 1000 | > 80 |
| 5 | Iodine | 7260 | < 150 | > 1000 | > 80 |

For the avoidance of doubt, the present application includes the subject-matter defined in the following numbered paragraphs:

## Claims

1. A method for reducing a trace element of mercury in a crude oil feedstock, comprising:
passing the crude oil feedstock having a mercury concentration as feed to a filtration device having at least a filter element to generate a filtered crude having a reduced concentration of mercury and a reject stream containing crude oil having a concentrated mercury level of at least 10 times the concentration of mercury in the crude oil feed;
mixing into the reject stream an effective amount of an extractive agent to remove at least a portion of the mercury for a treated crude oil having a reduced concentration of mercury;
wherein the extractive agent is selected from the group of oxidizing agents; reducing agents, organic or inorganic sulfidic compounds with at least one sulfur atom reactive with mercury; tetrakis(hydroxymethyl)phosphonium sulfate; tetrakis(hydroxymethyl) phosphonium chloride; and combinations thereof,
wherein the filtration device is a cross-flow filter device that generates a permeate stream comprising the filtered crude having a reduced concentration of mercury, and a retentate stream having a mercury concentration of at least 10 times the first concentration of mercury,
wherein the oxidizing agents are selected from the group of iodine sources, oxyhalites, hydroperoxides, organic peroxides, inorganic peracids and salts thereof, organic peracids and salts thereof, ozone, hypochlorite ions, vanadium oxytrichloride, Fenton's reagent, hypobromite ions, chlorine dioxine, iodate IO₃⁻, and mixtures thereof,
wherein the reducing agents are selected from reduced sulfur compounds containing at least one sulfur atom in an oxidation state less than +6; ferrous and ferric compounds; stannous compounds; oxalates; cuprous compounds; organic acids which decompose to form CO₂ upon heating and act as reducing agents; nitrogen compounds; sodium borohydride; diisobutylaluminium hydride (DIBAL-H); thiourea; a transition metal halide; SO₂ in N₂ or other inert gases; hydrogen; hydrogen sulfide; and CO₂ and carbon monoxide,
wherein the organic or inorganic sulfidic compounds are selected from alkali metal sulfides, alkaline earth metal sulfides, alkali metal polysulfides, alkaline earth metal polysulfides, alkali metal trithiocarbonates, dithiocarbamates, either in the monomeric or polymeric form, sulfurized olefins, mercaptans, thiophenes, thiophenols, mono and dithio organic acids, and mono and dithioesters, and mixtures thereof, and
wherein the method further comprises:
mixing a complexing agent into the mixture of the reject stream and the extractive agent, wherein the complexing agent is selected from the group of thiol groups, thiophene groups, thioether groups, thiazole groups, thalocyanine groups, thiourenium groups, amino groups, polyethylene imine groups, hydrazido groups, N-thiocarbamoyl-polyalkylene polyamino groups, sulfides, ammonium thiosulfate, alkali metal thiosulfates, alkaline earth metal thiosulfates, iron thiosulfates, alkali metal dithionites, and alkaline earth metal dithionites, polyamines, and mixtures thereof; and
wherein a portion of the retentate stream is recycled in a recirculation loop and combined with the crude oil feedstock as feed to the filtration device; or the cross-flow filtration device is periodically back-flushed with an extraction solvent to generate a back-flushed stream, and wherein the back-flushed stream is added to the retentate stream to generate the reject stream.

2. The method of claim 1, where the treated crude oil is combined with the filtered crude oil to form a combined product stream having a mercury concentration of less than 100 ppbw.

3. The method of any of claims 1 - 2, wherein the combined product stream is at least 98 vol. % of the crude oil feedstock.

4. The method of any of claims 1 - 2, wherein the extractive agent extracts a portion of the mercury into a water phase, and wherein the method further comprises:
separating the water phase containing the mercury from the crude oil for the treated crude oil to have a concentration of mercury of less than 100 ppbw.

5. The method of any of claims 1 - 2, wherein the filter element is pre-coated with a filter aid material having a median particle size of 0.1 to 100 µm and the filter aid precoat is at least 1 mm thick, and wherein the filter aid material is selected from pearlite, diatomite, cellulose fiber, and combinations thereof.

6. The method of claim 5, wherein the filter aid material is diatomite pretreated with an organic or inorganic sulfidic compound with at least one sulfur atom reactive with mercury.

7. The method of any of claims 1 - 2, wherein the extractive agent is an organic or inorganic sulfidic compound selected from the group of alkali metal sulfides, alkaline earth metal sulfides, alkali metal polysulfides, alkaline earth metal polysulfides, alkali metal trithiocarbonates, dithiocarbamates, either in the monomeric or polymeric form, sulfurized olefins, mercaptans, thiophenes, thiophenols, mono and dithio organic acids, and mono and dithioesters, and mixtures thereof.

8. The method of any of claims 1 - 2, wherein the extractive agent is a water-soluble monatomic sulfur compound selected from the group of sodium hydrosulfide, potassium hydrosulfide, ammonium hydrosulfide, sodium sulfide, potassium sulfide, calcium sulfide, magnesium sulfide, ammonium sulfide, and mixtures thereof.

9. The method of any of claims 1 - 2, wherein the extractive agent is an oxidizing agent selected from the group of iodine sources, oxyhalites, hydroperoxides, organic peroxides, inorganic peracids and salts thereof, organic peracids and salts thereof, ozone, hypochlorite ions, vanadium oxytrichloride, Fenton's reagent, hypobromite ions, chlorine dioxine, iodate IO₃⁻, and mixtures thereof.

## Patentansprüche

1. Verfahren zum Reduzieren eines Quecksilberspurenelements in einem Rohöleinsatzmaterial, umfassend:
Leiten des Rohöleinsatzmaterials mit einer Quecksilberkonzentration als Einspeisung zu einer Filtrationsvorrichtung mit mindestens einem Filterelement, um ein filtriertes Rohmaterial mit einer reduzierten Quecksilberkonzentration und einen ausgesonderten Strom zu erzeugen, der Rohöl mit einem konzentrierten Quecksilberniveau enthält, das mindestens dem 10-fachen der Quecksilberkonzentration in der Rohöleinspeisung entspricht;
Mischen einer effektiven Menge eines Extraktionsmittels in den ausgesonderten Strom, um mindestens einen Anteil des Quecksilbers zu entfernen, um zu einem behandelten Rohöl mit einer reduzierten Quecksilberkonzentration zu kommen;
wobei das Extraktionsmittel ausgewählt ist aus der Gruppe der Oxidationsmittel; Reduktionsmittel, organischen oder anorganischen sulfidischen Verbindungen mit mindestens einem mit Quecksilber reaktiven Schwefelatom; Tetrakis(hydroxymethyl)phos-phoniumsulfat; Tetrakis(hydroxymethyl)phosphonium-chlorid und Kombinationen davon,
wobei die Filtrationsvorrichtung eine Querstromfiltervorrichtung ist, die einen Permeatstrom, der das filtrierte Rohmaterial mit einer reduzierten Quecksilberkonzentration umfasst, und einen Retentatstrom mit einer Quecksilberkonzentration erzeugt, die mindestens dem 10-fachen der ersten Quecksilberkonzentration entspricht,
wobei die Oxidationsmittel ausgewählt sind aus der Gruppe der Iodquellen, Oxyhalogenite, Hydroperoxide, organischen Peroxide, anorganischen Persäuren und Salzen davon, organischen Persäuren und Salzen davon, Ozon, Hypochloritionen, Vanadiumoxytrichlorid, Fentons-Reagenz, Hypobromitionen, Chlordioxid, Iodat 10₃⁻ und Mischungen davon,
wobei die Reduktionsmittel ausgewählt sind aus reduzierten Schwefelverbindungen, die mindestens ein Schwefelatom in einem Oxidationszustand kleiner als +6 enthalten; Eisen(II)- und Eisen(III)verbindungen; Zinn(II)verbindungen; Oxalaten; Kupfer(I)-verbindungen; organischen Säuren, die sich beim Erwärmen unter Bildung von CO₂ zersetzen und als Reduktionsmittel wirken; Stickstoffverbindungen; Natriumborhydrid; Diisobutylaluminiumhydrid (DIBAL-H); Thioharnstoff; einem Übergangsmetallhalogenid; SO₂ in N₂ oder anderen Inertgasen; Wasserstoff; Schwefelwasserstoff; und CO₂ und Kohlenmonoxid,
wobei die organischen oder anorganischen sulfidischen Verbindungen ausgewählt sind aus Alkalimetallsulfiden, Erdalkalimetallsulfiden, Alkalimetallpolysulfiden, Erdalkalimetallpolysulfiden, Alkalimetalltrithiocarbonaten, Dithiocarbamaten, entweder in der monomeren oder der polymeren Form, sulfurierten Olefinen, Merkaptanen, Thiophenen, Thiophenolen, organischen Mono- und Dithiosäuren und Mono- und Dithioestern sowie Mischungen davon, und wobei das Verfahren des Weiteren umfasst:
Mischen eines Komplexierungsmittels in die Mischung des ausgesonderten Stroms und des Extraktionsmittels, wobei das Komplexierungsmittel ausgewählt ist aus der Gruppe von Thiolgruppen, Thiophengruppen, Thioethergruppen, Thiazolgruppen, Phthalocyaningruppen, Thioureniumgruppen, Aminogruppen, Polyethylenimingruppen, Hydrazidogruppen, N-Thiocarbamoylpolyalkylenpolyaminogruppen, Sulfiden, Ammoniumthiosulfat, Alkalimetallthiosulfaten, Erdalkalimetallthiosulfaten, Eisenthiosulfaten, Alkalimetalldithioniten und Erdalkalimetalldithioniten, Polyaminen und Mischungen davon; und
wobei ein Anteil des Retentatstroms in eine Rezirkulationsschleife recycelt und mit dem Rohöleinsatzmaterial als Einspeisung zu der Filtrationsvorrichtung kombiniert wird; oder die Querstromfiltrationsvorrichtung periodisch mit einem Extraktionslösungsmittel rückgespült wird, um einen rückgespülten Strom zu erzeugen, und wobei der rückgespülte Strom zu dem Retentatstrom gegeben wird, um den ausgesonderten Strom zu erzeugen.

2. Verfahren nach Anspruch 1, wobei das behandelte Rohöl mit dem filtrierten Rohöl kombiniert wird, um einen kombinierten Produktstrom mit einer Quecksilberkonzentration von weniger als 100 ppm (gewichtsbezogen) zu bilden.

3. Verfahren nach einem der Ansprüche 1 bis 2, wobei der kombinierte Produktstrom mindestens 98 Vol.% des Rohöleinsatzmaterials ist.

4. Verfahren nach einem der Ansprüche 1 bis 2, wobei das Extraktionsmittel einen Anteil des Quecksilbers in eine Wasserphase extrahiert, und wobei das Verfahren des Weiteren umfasst:
Trennen der Wasserphase, welche das Quecksilber enthält, von dem Rohöl, damit das behandelte Rohöl eine Quecksilberkonzentration von weniger als 100 ppb (gewichtsbezogen) hat.

5. Verfahren nach einem der Ansprüche 1 bis 2, wobei das Filterelement mit einem Filterhilfsmittelmaterial mit einem Medianwert der Partikelgröße von 0,1 bis 100 µm vorbeschichtet ist, und wobei die Filterhilfsmittelvorbeschichtung mindestens 1 mm dick ist und das Filterhilfsmaterial ausgewählt ist aus Perlit, Diatomit, Cellulosefaser und Kombinationen davon.

6. Verfahren nach Anspruch 5, wobei das Filterhilfsmittelmaterial Diatomit ist, das mit einer organischen oder anorganischen sulfidischen Verbindung mit mindestens einem mit Quecksilber reaktiven Schwefelatom vorbehandelt worden ist.

7. Verfahren nach einem der Ansprüche 1 bis 2, wobei das Extraktionsmittel eine organische oder anorganische sulfidische Verbindung ausgewählt aus der Gruppe von Alkalimetallsulfiden, Erdalkalimetallsulfiden, Alkalimetallpolysulfiden, Erdalkalimetallpolysulfiden, Alkalimetalltrithiocarbonaten, Dithiocarbamaten, entweder in der monomeren oder der polymeren Form, sulfurierten Olefinen, Merkaptanen, Thiophenen, Thiophenolen, organischen Mono- und Dithiosäuren und Mono- und Dithioestern sowie Mischungen davon ist.

8. Verfahren nach einem der Ansprüche 1 bis 2, wobei das Extraktionsmittel eine wasserlösliche monoatomare Schwefelverbindung ausgewählt aus der Gruppe von Natriumhydrosulfid, Kaliumhydrosulfid, Ammoniumhydrosulfid, Natriumsulfid, Kaliumsulfid, Calciumsulfid, Magnesiumsulfid, Ammoniumsulfid und Mischungen davon ist.

9. Verfahren nach einem der Ansprüche 1 bis 2, wobei das Extraktionsmittel ein Oxidationsmittel ausgewählt aus der Gruppe der Iodquellen, Oxyhalogenite, Hydroperoxide, organischen Peroxide, anorganischen Persäuren und Salzen davon, organischen Persäuren und Salzen davon, Ozon, Hypochloritionen, Vanadiumoxytrichlorid, Fentons-Reagenz, Hypobromitionen, Chlordioxid, Iodat IO₃⁻ und Mischungen davon ist.

## Revendications

1. Procédé pour la réduction d'un élément trace de mercure dans une charge d'alimentation de pétrole brut, comprenant :
le passage de la charge d'alimentation de pétrole brut ayant une certaine concentration de mercure en tant qu'alimentation dans un dispositif de filtration ayant au moins un élément de filtration pour produire un brut filtré ayant une concentration de mercure réduite et un flux de rejet contenant du pétrole brut ayant un niveau de mercure concentré d'au moins 10 fois la concentration de mercure dans l'alimentation de pétrole brut ;
le mélange dans le flux de rejet d'une quantité efficace d'un agent d'extraction pour éliminer au moins une partie du mercure pour un pétrole brut traité ayant une concentration de mercure réduite ;
dans lequel l'agent d'extraction est choisi dans le groupe des agents oxydants ; des agents réducteurs, des composés sulfurés organiques ou inorganiques comportant au moins un atome de soufre réactif avec le mercure ; du sulfate de tétrakis(hydroxyméthyl)phosphonium ; du chlorure de tétrakis(hydroxyméthyl)phosphonium ; et des combinaisons de ceux-ci,
dans lequel le dispositif de filtration est un dispositif de filtration tangentielle qui produit un flux de perméat comprenant le brut filtré ayant une concentration de mercure réduite et un flux de rétentat ayant une concentration de mercure d'au moins 10 fois la première concentration de mercure,
dans lequel les agents oxydants sont choisis dans le groupe des sources d'iode, des oxyhalites, des hydroperoxydes, des peroxydes organiques, des peracides inorganiques et des sels de ceux-ci, des peracides organiques et des sels de ceux-ci, de l'ozone, des ions hypochlorite, de l'oxytrichlorure de vanadium, du réactif de Fenton, des ions hypobromite, du dioxyde de chlore, de l'iodate IO₃⁻ et des mélanges de ceux-ci,
dans lequel les agents réducteurs sont choisis parmi des composés soufrés réduits contenant au moins un atome de soufre dans un état d'oxydation inférieur à +6 ; des composés ferreux et ferriques ; des composés stanneux ; des oxalates ; des composés cuivreux ; des acides organiques qui se décomposent pour former du CO₂ lors du chauffage et qui agissent comme des agents réducteurs ; des composés azotés ; le borohydrure de sodium ; l'hydrure de diisobutylaluminium (DIBAL-H) ; la thiourée ; un halogénure de métal de transition ; le SO₂ dans du N₂ ou d'autres gaz inertes ; l'hydrogène ; le sulfure d'hydrogène ; et le CO₂ et le monoxyde de carbone,
dans lequel les composés sulfurés organiques ou inorganiques sont choisis parmi des sulfures de métaux alcalins, des sulfures de métaux alcalinoterreux, des polysulfures de métaux alcalins, des polysulfures de métaux alcalinoterreux, des trithiocarbonates de métaux alcalins, des dithiocarbamates, sous forme soit monomère soit polymère, des oléfines sulfurées, des mercaptans, des thiophènes, des thiophénols, des monothioacides et dithioacides organiques et des monothioesters et dithioesters et des mélanges de ceux-ci et
dans lequel le procédé comprend en outre :
le mélange d'un agent complexant dans le mélange du flux de rejet et de l'agent d'extraction, dans lequel l'agent complexant est choisi dans le groupe des groupes thiol, des groupes thiophène, des groupes thioéther, des groupes thiazole, des groupes phtalocyanine, des groupes thiourénium, des groupes amino, des groupes polyéthylèneimine, des groupes hydrazido, des groupes N-thiocarbamoylpolyalkylènepolyamino, des sulfures, du thiosulfate d'ammonium, des thiosulfates de métaux alcalins, des thiosulfates de métaux alcalinoterreux, des thiosulfates de fer, des dithionites de métaux alcalins et dithionites de métaux alcalinoterreux, des polyamines et des mélanges de ceux-ci ; et
dans lequel une partie du flux de rétentat est recyclée dans une boucle de recirculation et combinée avec la charge d'alimentation de pétrole brut en tant qu'alimentation du dispositif de filtration ; ou le dispositif de filtration tangentielle est périodiquement lavé à contre-courant avec un solvant d'extraction pour produire un flux de lavage à contre-courant et dans lequel le flux de lavage à contre-courant est ajouté au flux de rétentat pour produire le flux de rejet.

2. Procédé selon la revendication 1, où le pétrole brut traité est combiné avec le pétrole brut filtré pour former un flux de produit combiné ayant une concentration de mercure de moins de 100 ppb en poids.

3. Procédé selon l'une quelconque des revendications 1-2, dans lequel le flux de produit combiné est au moins 98 % en volume de la charge d'alimentation de pétrole brut.

4. Procédé selon l'une quelconque des revendications 1-2, dans lequel l'agent d'extraction extrait une partie du mercure dans une phase aqueuse et dans lequel le procédé comprend en outre :
la séparation de la phase aqueuse contenant le mercure du pétrole brut pour que le pétrole brut traité ait une concentration de mercure de moins de 100 ppb en poids.

5. Procédé selon l'une quelconque des revendications 1-2, dans lequel l'élément de filtration est pré-revêtu d'un matériau adjuvant de filtration ayant une taille médiane des particules de 0,1 à 100 µm et le pré-revêtement d'adjuvant de filtration a une épaisseur d'au moins 1 mm et dans lequel le matériau adjuvant de filtration est choisi parmi la perlite, la diatomite, la fibre de cellulose et les combinaisons de celles-ci.

6. Procédé selon la revendication 5, dans lequel le matériau adjuvant de filtration est de la diatomite prétraitée avec un composé sulfuré organique ou inorganique comportant au moins un atome de soufre réactif avec le mercure.

7. Procédé selon l'une quelconque des revendications 1-2, dans lequel l'agent d'extraction est un composé sulfuré organique ou inorganique choisi dans le groupe des sulfures de métaux alcalins, des sulfures de métaux alcalinoterreux, des polysulfures de métaux alcalins, des polysulfures de métaux alcalinoterreux, des trithiocarbonates de métaux alcalins, des dithiocarbamates, sous forme soit monomère soit polymère, des oléfines sulfurées, des mercaptans, des thiophènes, des thiophénols, des monothioacides et dithioacides organiques et des monothioesters et dithioesters et des mélanges de ceux-ci.

8. Procédé selon l'une quelconque des revendications 1-2, dans lequel l'agent d'extraction est un composé soufré monoatomique hydrosoluble choisi dans le groupe de l'hydrosulfure de sodium, de l'hydrosulfure de potassium, de l'hydrosulfure d'ammonium, du sulfure de sodium, du sulfure de potassium, du sulfure de calcium, du sulfure de magnésium, du sulfure d'ammonium et des mélanges de ceux-ci.

9. Procédé selon l'une quelconque des revendications 1-2, dans lequel l'agent d'extraction est un agent oxydant choisi dans le groupe des sources d'iode, des oxyhalites, des hydroperoxydes, des peroxydes organiques, des peracides inorganiques et des sels de ceux-ci, des peracides organiques et des sels de ceux-ci, de l'ozone, des ions hypochlorite, de l'oxytrichlorure de vanadium, du réactif de Fenton, des ions hypobromite, du dioxyde de chlore, de l'iodate IO₃⁻et des mélanges de ceux-ci.
